# EUROPEAN PATENT SPECIFICATION

(11) **EP 3 483 423 B1**
(45) Date of publication and mention of the grant of the patent: **15.04.2020**
(21) Application number: 17382766.8
(22) Date of filing: 13.11.2017
(51) Int. Cl.: F03B 13/14, F03B 11/00, F03B 13/24

(54) **AIR TURBINE FOR EXTRACTING ENERGY FROM OSCILLATING WATER COLUMN DEVICES**
LUFTTURBINE ZUR EXTRAKTION VON ENERGIE AUS SCHWINGENDEN WASSERSÄULENVORRICHTUNGEN
TURBINE À AIR POUR EXTRAIRE L'ÉNERGIE À PARTIR DE DISPOSITIFS DE COLONNE D'EAU OSCILLANTE

(43) Date of publication of application: 15.05.2019
(73) Proprietor: Sener Ingenieria Y Sistemas, S.A., 48930 Getxo-Las Arenas, Vizcaya (ES)
(72) Inventor: AMEZAGA GARCIA, Alvaro, 48930 LAS ARENAS - GETXO (ES); VILLARROEL PINEDO, Eduardo, 48930 LAS ARENAS - GETXO (ES)
(74) Representative: Igartua, Ismael

(56) References cited:
- EP-A1- 2 949 920
- WO-A2-2012/112892
- DE-B3-102011 100 756
- MX-A- 2012 001 639
- US-A1- 2014 356 139

## Description

### TECHNICAL FIELD

The present invention is related to an air turbine for extracting energy from an Oscillating Water Column (OWC) device.

### PRIOR ART

Oscillating Water Column (OWC) devices for generating energy from waves are known in the art. These devices consist of a structure partially submerged in the sea creating a trapped air volume above a water column. Waves force the water column to act like a piston, moving up and down, forcing the air out of an air chamber of the structure and back into it. When a wave enters the OWC, the water movement forces the air trapped in the air chamber to move up and to pass through a turbine. Once the water is receded, the air of the water column is depressurised and sucked through the same turbine in the case of bi-directional turbines, or through other turbine in the case of unidirectional turbines. A generator coupled to the turbine converts the rotational mechanical energy into electricity. Given that the movement of the air is bidirectional in the water column, alternating flow must be turn to unidirectional flow so that unidirectional turbines may be used. For rectifying the flow, unidirectional valves, check valves or non-return valves can be used which control the flow direction isolating the device chambers from each other.

Furthermore, the efficiency of turbines is closely linked to the rotation speed of the rotor, the air flow speed and the angles of the rotor blades and/or of the stator blades. To reduce the influence of flow changes on efficiency at the expense of a greater mechanical complexity and cost, turbines with a variable geometry that control the pitch of the rotor blades and/or stator blades are used. There are multiple implementations regarding the pitch control of blades, which are mainly applied in the rotor and have mechanisms that are actuated by hydraulic, electromagnetic, electrical or other drive systems. The integration of said mechanisms in a rotor that rotates at high speeds in marine environments involves a lot of problems.

WO2007/009163A1 discloses a blade pitch control mechanism for a turbine rotor comprising a gear assembly mountable to a hub of said rotor for engaging a plurality of blades rotatably mounted to said hub, and driving means operatively connected to said gear assembly for rotating said gear assembly about an axis of said rotor. The driving means rotates the gear assembly at substantially the same speed as the rotational speed of the rotor to fix the position of the blades relative to the hub. Said driving means selectively varies said rotational speed of said gear assembly relative to said rotational speed of said rotor, inducing rotation of said blades relative to said hub by said gear assembly, thereby adjusting the pitch of said blades.

WO2012/112892A2 discloses an OWC system comprising a structure containing an air water chamber, an air turbine mounted in the opening of said structure and designed to be driven by air flowing through the structure during the operation of the OWC system, said air turbine including self-articulating blades pivoting about a rotational axis in a predetermined manner in response to pressure exerted by the air flowing, a valve designed to modulate the flow of air through the air turbine during operation of the OWC system, and a control system designed to modulate the valve allowing pressure within the air water chamber to build to a predetermined magnitude before opening the valve.

### DISCLOSURE OF THE INVENTION

The object of the invention is to provide an air turbine for extracting energy from oscillating water column devices, as defined in claims.

The air turbine of the invention comprises a rotor comprising a plurality of blades, a shut-off system configurated for closing the inlet of air to the rotor, and a drive system configured for operating the shut-off system.

The shut-off system is arranged upstream of the rotor and includes a plurality of flaps, each flap being able to rotate with respect to a rotation axis, the rotation axis being arranged substantially horizontal and off-centre with respect to the center of gravity and/or with respect to the center of buoyancy of each flap. In this way, each flap tends to rotate to a self-closing position when is not being actuated by the drive system, closing the inlet of air to the rotor.

The air turbine of the invention makes the changing air flow conditions become more appropriate and the angle of incidence of the air flow on the rotor blades the one needed to produce torque, reducing the transitory time required to adapt the limit air layer to the blade shape, and consequently, increasing the efficiency and the energy captured for each wave cycle.. The shut-off system opens or closes the passage of the air flow to the rotor, allowing the air flow to be better adhered to the corresponding blade. It simplifies the alternatives known in the state of the art by making the shut-off system independent from the rotor and the stator, making the construction and the control of the mechanism much easier. Moreover, the shut-off system allows the flaps to be self-closed automatically when the drive system does not operate.

A modular air turbine is obtained, improving its maintenance.

These and other advantages and features of the invention will become evident in view of the drawings and the detailed description of the invention.

### DESCRIPTION OF THE DRAWINGS

Figure 1 shows schematically an oscillating water column device comprising air turbines according to one embodiment of the invention.
Figure 2 shows a perspective view of the air turbine shown schematically in Figure 1.
Figure 3 shows an exploded view of the air turbine shown schematically in Figure 1.
Figure 4 shows another perspective view of the air turbine shown schematically in Figure 1.
Figure 5 shows a perspective view of a shut-off system comprised in the air turbine shown schematically in Figure 1 in an open position.
Figure 6 shows a frontal view of the shut-off system shown in detail in Figure 5.
Figure 7 shows a frontal view of the shut-off system shown in detail in Figure 5 in a close position.
Figure 8 shows a sectioned view of the shut-off system shown in detail in Figure 5 in a close position.
Figure 9 shows a partial view of a drive system comprised in the shut-off system shown in detail in Figure 5.
Figure 10 shows a cross section of a flap comprised in the shut-off system shown in detail in Figure 5.
Figure 11 shows another partial view of a drive system comprised in the shut-off system shown in detail in Figure 5.

### DETAILED DISCLOSURE OF THE INVENTION

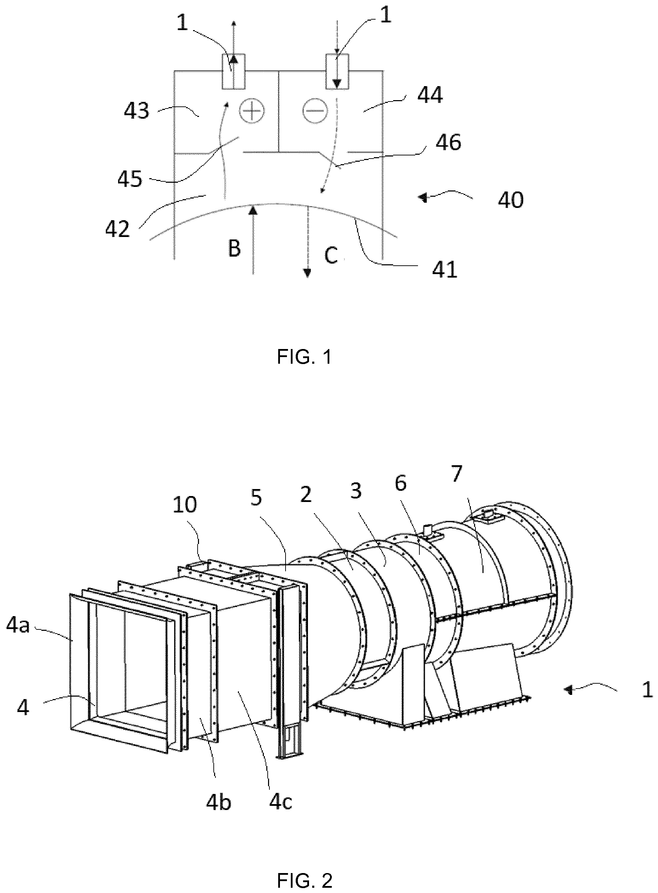

In Figure 1, a device 40 for extracting energy from waves, also known as Oscillating Water Column (OWC) device, is shown, said device 40 comprising an air chamber 42, a first pneumatic accumulator 43, a second pneumatic accumulator 44 and two air turbines 1, each one being coupled to the corresponding pneumatic accumulator 43 and 44. The term air turbine used through the description, includes not only turbines of air but also of other fluids that could pass through said turbines. The device 40 includes furthermore a first unidirectional valve 45 arranged at an inlet of the first pneumatic accumulator 43 and a second unidirectional valve 46 arranged at an outlet of the second pneumatic accumulator 44.

Waves act like a piston, moving up and down with a velocity that depends on the wave conditions, forcing the air flow housed in the air chamber 42 out of said chamber 42 and back into it. When the column of water 41 moves up (shown with the arrow B in Figure 1), the pressure generated in the air chamber 42 generates an air flow that passes through the first unidirectional valve 45 entering in the first pneumatic accumulator 43 generating an overpressure, the energy from waves being transformed into pneumatic energy. The air flow housed in the first pneumatic accumulator 43 can move the corresponding air turbine 1, going out to the atmosphere, the pneumatic energy being transformed into a mechanical energy that allows to rotate an alternator 7 for transforming to electrical energy.

When the column of water 41 moves down (shown by the arrow C in Figure 1), the air from the atmosphere goes through the corresponding air turbine 1 to the second pneumatic accumulator 44. From said second pneumatic accumulator 44 the air passes to the air chamber 42 through the second unidirectional valve 46.

The unidirectional valves 45 and 46 are alternatively opened and closed, allowing the overpressure in the first pneumatic accumulator 43 and the vacuum in the second pneumatic accumulator 44.

In other configurations, the unidirectional air turbine 1 works between the first pneumatic accumulator and the second pneumatic accumulator 44.

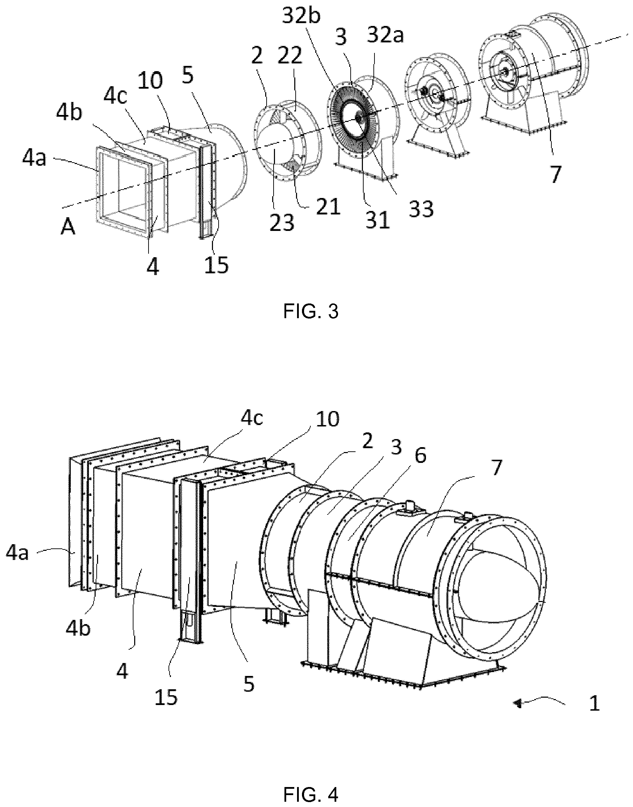

The air turbine 1 according to the invention comprises a rotor 3 comprising a plurality of blades 31, a stator 2 comprising a plurality of blades 21, a shut-off system 10 configurated for opening or closing the inlet of air to the rotor 3, and at least one drive system 15 configurated for operating the shut-off system 10. The air flow entering in the air turbine 1 causes the rotation of the rotor 3 with respect to a rotational axis A shown in Figure 3. The alternator 7, coupled to the rotor 3, converts the kinetic energy from the rotor 3 into electrical energy.

The device 40 for extracting energy from waves includes a control system not shown in the figures that, in function of the rotation speed of the rotor 3 and of the pressure measured in the inlet of the stator 2, sends a signal to the drive system 15 to open or close the shut-off system 10. In this way, the angle with which the air flow incides in the plurality of blades 31 of the rotor 3 is the design angle, reducing the transitory time and improving the efficiency of the turbine 1, the design angle being the nominal angle for which the geometry of the blade is designed. Once the drive system 15 is not actuated by the control system or incase of a failure of the control system, the shut-off system 10 is self-closing, that is to say that closes the inlet of air to the rotor 3. The shut-off system 10 operates at very high speed, in particular less than one second of opening time.

Both the plurality of blades 31 and 21 of the rotor 3 and of the stator 2 are attached fixed to the rotor 3 and to the stator 21 respectively. The stator 2 includes a support 22 of a cylindrical geometry, the plurality of blades 21 of the stator 2 being attached fixed to the stator 2, in particular to the support 22 of the stator 2. The plurality of blades 21 are radially arranged along said support 22 as it can be seen in Figure 3.

The rotor 3 includes an outer support 32a of a cylindrical geometry and an inner support 32b of a cylindrical geometry, the plurality of blades 31 of the rotor 3 being attached fixed to the rotor 3. In particular, the plurality of blades 31 are radially arranged fixed to the inner support 32. Said inner support 32 is coupled to a hub 33 of the rotor 3 which is configured to be coupled to the alternator 7, so that the alternator 7 can transform the mechanical energy from the rotor 3 into electrical energy.

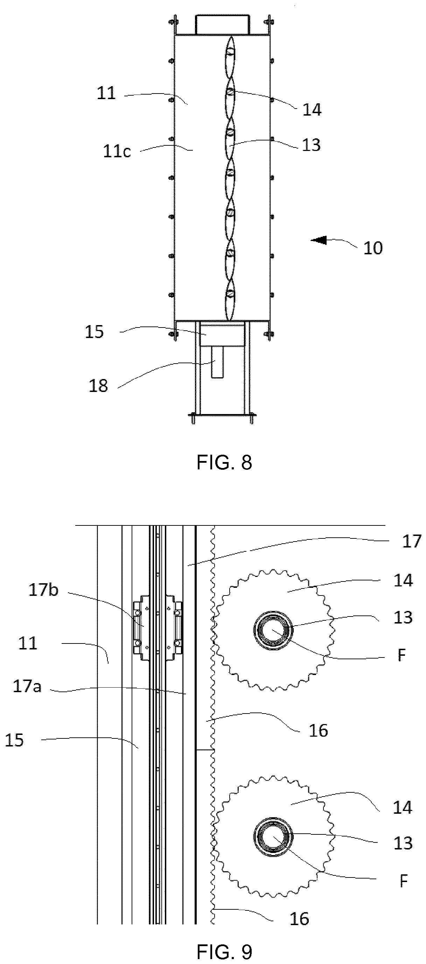

The shut-off system 10 is arranged upstream of the stator 2 and includes a plurality of flaps 13. Each flap 13 is able to rotate with respect to a rotation axis F, the rotation axis F being arranged substantially horizontal and off-centre with respect to the center of gravity E and/or with respect to the center of buoyancy D of each flap 13, as it is shown in Figure 8, so that each flap 13 tends to self-rotate to a closing position when it is not being actuated by the corresponding drive system 15, closing the inlet of air flow to the rotor 3.

The shut-off system 10 further comprises a support 11 delimiting a cavity 19 and at least a column of a plurality of flaps 13 housed in said cavity 19 and supported in the support 11. The support 11 has a prismatic geometry. The plurality of flaps 13 are pivotably coupled to the support 11, the axis of rotation F of each flap 13 being arranged substantially horizontal so that the flaps 13 open or close the cavity 19 for allowing or not the inlet of air flow to the rotor 3. Each of the flaps 13 has a symmetrical aerodynamic profile and includes substantially flat edges 13a and 13b configured to close tightly against the support 11, in particular against substantially flat walls 11c of the support 11.

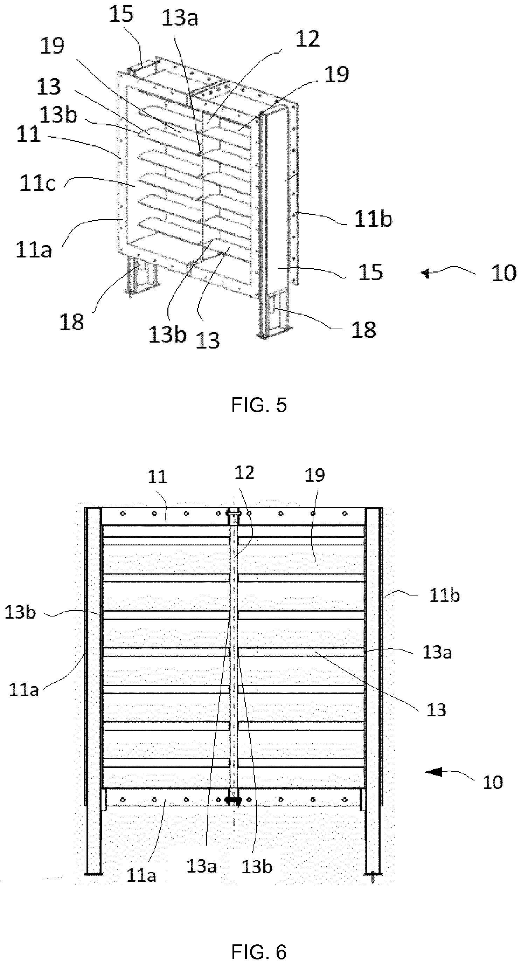

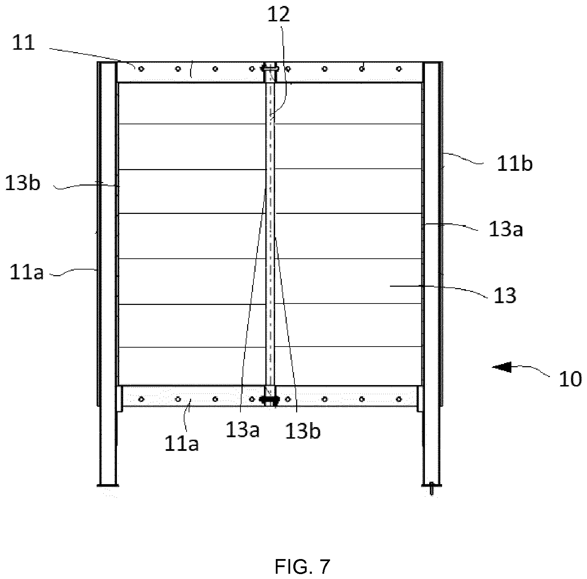

In the embodiment shown in the Figures 5 to 7, the shut-off system 10 comprises two columns, each one with a plurality of flaps 13, said columns of a plurality of flaps 13 being housed in the cavity 19 of the support 11 next to each other, and each flap 13 being coupled pivotably to the support 11. The axis of rotation F of each flap 13 is arranged substantially horizontal so that the flaps 13 open or close the cavity 19 for allowing or not the inlet of air flow to the stator 2 and rotor 3. Each of the columns of plurality of flaps 13 is operated by the respective drive system 15. Furthermore, each of the columns of plurality of flaps 13 can be operated independently by the respective drive system 15 avoiding stopping the air turbine 1 in case of malfunctioning of the shut-off system.

In the embodiment shown in particular in Figures 5 to 7, the support 11 includes a first part 11a and a second part 11b delimiting the cavity 19. Both first and second parts 11a and 11b have a "C" shape geometry. The support 11 further includes a partition wall 12 arranged substantially vertical dividing the cavity 19, and the flaps 13 are supported on the support 11, in particular on the flat wall 11c of the support 11 and on the partition wall 12. The substantially flat edges 13a and 13b of each flap 13 close tightly against the support 11, in particular against the substantially flat wall 11c of the support 11, and against the partition wall 12 which also is substantially flat, withstanding overpressure and vacuum and guaranteeing the air tightness. In other embodiments, the support 11 may not include the partition wall 12.

The flaps 13 are elastic and can be deformed to facilitate the overlap between them to achieve the complete closure of the air flow through the turbine 1 as it is shown in figure 8. Each of the flaps 13 is made of elastic material, in particular of fiberglass, the plurality of flaps 13 being arranged so that each flap 13 is in contact, in the closing position, with the outer surface of the corresponding adjacent flap 13 to block the flow of air.

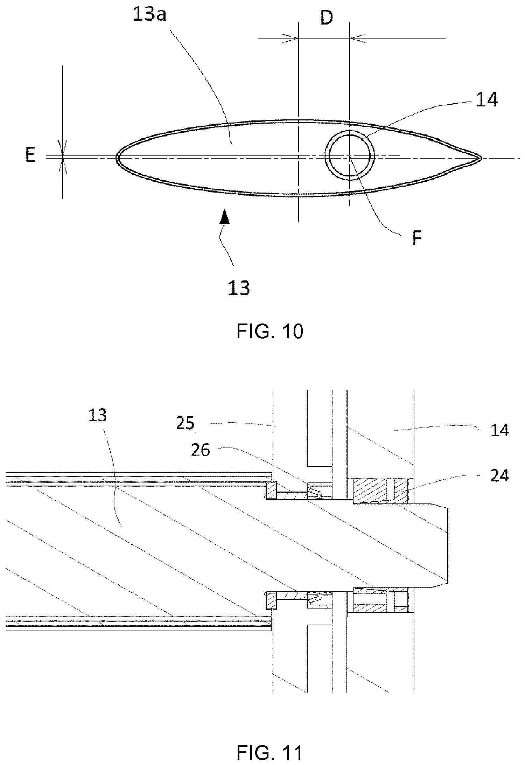

Moreover, in the embodiment shown in the figures 5 to 7, each drive system 15 comprises linear guide means 17, a rack 16 coupled to the linear guide means 17, and a pinion 14 fixed to each flap 13 and coupled to the corresponding rack 16. The linear guide means 17 comprises linear guide elements 17a to which the corresponding rack 16 is fixed, and linear ball rolling cages 17b fixed to the support 11, said linear ball rolling cages 17b guiding displacement of the corresponding linear guide element 17a. Thus, the linear guide element 17a is the movable element whereas the linear ball rolling cages 17b are fixed to the support 11, allowing a centralized greasing system. Both, the linear guide elements 17a and the corresponding rack 16, are arranged substantially vertical avoiding radial stresses in the flaps 13. The shaft 13b of each flap 13 is coupled to the corresponding rack 16 through a conical coupling 24 allowing a fine adjustment between the flaps 13 in the closing position as it is shown in detail in figure 11. The drive system 15 allows to actuate the shut-off system 10 with higher linear velocities with respect to the state of the art known for actuating the conventional turbine's blades as it is not affected by curvilineal displacements.

Each drive system 15 also includes linear acting means 18 configured to move the rack 16 independently and substantially vertically along the linear guide means 17, rotating the corresponding column of flaps 24 to open or close the flow of the fluid through the shut-off system 10. The linear acting means 18 acts rapidly displacing the corresponding rack 16 vertically, considering that the shut-off system 10 has to operate at very high speed, in particular less than one second of opening time.

Moreover, the air turbine 1 comprises an inlet transition piece 4 through which the air turbine 1 is fixed to the corresponding pneumatic accumulator 43 and 44, the shut-off system 10 being fixed to said inlet transition piece 4. The inlet transition piece 4, which comprises a plurality of parts 4a, 4b and 4c arranged adjacent to each other, has a prismatic geometry similar to the geometry of shut-off system 10. The inlet transition piece 4 further includes a bellows seal which allows the inlet transition piece 4 to be expandable and to adapt the inlet transition piece 4 to the vibrations generated in the air turbine 1. Said inlet transition piece 4 connects the corresponding pneumatic accumulator 43 or 44 with the shut off system 10.

The air turbine 1 also comprises an adapter nozzle 5 configurated for coupling the shut-off system 10 of a prismatic geometry with the stator 2 of a cylindrical geometry. Said adapter nozzle 5 allows to have an axial and uniform air flow in the stator 2.

The air turbine 1 also comprises an inlet nose 23 arranged fixed to the support 22 of the stator 2 protruding with respect to the stator 2, said inlet nose 23 diving the air flow to be axial and uniform in the stator 2.

## Claims

1. Air turbine for extracting energy from oscillating water column devices, comprising a rotor (3) comprising a plurality of blades (31), a shut-off system (10) configured for opening or closing the inlet of air to the rotor (3), and at least one drive system (15) configured for operating the shut-off system (10), **characterized in that** the shut-off system (10) arranged upstream of the rotor (3) comprises a plurality of flaps (13), each flap (13) being able to rotate with respect to a rotation axis (F), the rotation axis (F) being arranged substantially horizontal and off-centre with respect to the center of gravity (D) and/or with respect to the center of buoyancy (E) of each flap (13), so that each flap (13) tends to rotate to a closing position when it is not being actuated by the drive system (15), closing the inlet of air to the rotor (3).

2. Air turbine according to the preceding claim, comprising a control system for opening and closing the shut-off system (10) based upon an air pressure detected in the rotor (3) and the rotation speed of the rotor (3), the control system actuating the corresponding drive system (15) for opening and closing the air turbine (1).

3. Air turbine according to any of the preceding claims, wherein the plurality of blades (31) of the rotor (3) are fixed to the rotor (3).

4. Air turbine according to any of the preceding claims, further comprising a stator (2) comprising a plurality of blades (21) attached fixed to the stator (2), the shut-off system (10) being arranged upstream of the stator (2) and the rotor (3).

5. Air turbine according to claim 4, further comprising an adapter nozzle (5) arranged between the shut-off system (10) and the stator (2), which is configurated for coupling the shut-off system (10) of a prismatic geometry to the stator (2) of a cylindric geometry.

6. Air turbine according to claim 4 or 5, comprising an inlet nose (23) arranged before the stator (2) which dives the flow to be axial and uniform in the stator (2).

7. Air turbine according to any of the preceding claims, wherein the shut-off system (10) comprises at least one column of a plurality of flaps (13) operated by one drive system (15).

8. Air turbine according to claim 7, wherein the shut-off system (10) comprises a support (11) delimiting a cavity (19), the plurality of flaps (13) being housed in said cavity (19) and supported on the support (11).

9. Air turbine according to claim 8, wherein the support (11) comprises substantially flat walls (11c) and each of the flaps (13) has a symmetrical aerodynamic profile and includes substantially flat edges (13a,13b) configured to close tightly against said walls (11c) of the support (11).

10. Air turbine according to any of claims 1 to 6, wherein the shut-off system (10) comprises at least two columns of a plurality of flaps (13) which can be operated independently by a respective drive system (15).

11. Air turbine according to claim 10, wherein the shut-off system (10) comprises a support (11) delimiting a cavity (19) and a partition wall (12) arranged substantially vertical dividing the cavity (19), the plurality of flaps (13) being housed in said cavity (19) and each column of the plurality of flaps (13) being supported on the support (11) and the partition wall (12).

12. Air turbine according to claim 11, wherein each of the flaps (13) of the shut-off system (10) have a symmetrical aerodynamic profile and includes substantially flat edges (13a,13b) configured to close tightly against the support (11) and the partition wall (12).

13. Air turbine according to any of the preceding claims, wherein each of the flaps (13) is made of elastic material, the plurality of flaps (13) being arranged so that each flap (13) is adapted to the geometry of the corresponding adjacent flap (13) in the closing position to block the flow of fluid.

14. Air turbine according to any of the preceding claims, wherein the at least one drive system (15) comprises linear guide means (17), a rack (16) coupled to the linear guide means (17), a pinion (14) fixed to each flap (13) and coupled to the rack (16), and linear acting means (18) configured to move the rack (16) substantially vertically along the linear guide element (17) rotating the corresponding flap (13) to open the passage of the flow of the fluid.

15. Air turbine according to the preceding claim, wherein the linear guide means (17) comprises linear guide elements (17a) to which the corresponding rack (16) is fixed and linear ball rolling cages (17b) fixed to the support (11), said linear ball rolling cages (17b) guiding the displacement of the corresponding linear guide element (17a).

## Patentansprüche

1. Luftturbine zur Extraktion von Energie aus schwingenden Wassersäulenvorrichtungen, umfassend einen Rotor (3), welcher eine Vielzahl von Schaufeln (31) umfasst, ein Abschaltsystem (10), welches dazu ausgebildet ist, der Eintritt von Luft in den Rotor (3) zu öffnen oder zu schließen, und mindestens ein Antriebssystem (15), welches dazu ausgebildet ist, das Abschaltsystem (10) zu betreiben, **dadurch gekennzeichnet, dass** das Abschaltsystem (10), welches stromaufwärts des Rotors (3) angeordnet ist, eine Vielzahl von Klappen (13) umfasst, wobei jede Klappe (13) in der Lage ist, in Bezug auf eine Rotationsachse (F) zu rotieren, wobei die Rotationsachse (F) im Wesentlichen horizontal und außermittig in Bezug auf das Schwerkraftzentrum (D) und/oder in Bezug auf das Auftriebskraftzentrum (E) jeder Klappe (13) angeordnet ist, sodass jede Klappe (13) dazu neigt, zu einer Schließstellung zu rotieren, wenn sie nicht vom Antriebssystem (15) betätigt wird, sodass der Eintritt von Luft in den Rotor (3) geschlossen wird.

2. Luftturbine nach dem vorhergehenden Anspruch, umfassend ein Steuersystem zum Öffnen und Schließen des Abschaltsystems (10) basierend auf einem Luftdruck, welcher im Rotor (3) detektiert wird, und der Rotationsgeschwindigkeit des Rotors (3), wobei das Steuersystem das entsprechende Antriebssystem (15) zum Öffnen und Schließen der Luftturbine (1) betätigt.

3. Luftturbine nach einem der vorhergehenden Ansprüche, wobei die Vielzahl von Schaufeln (31) des Rotors (3) am Rotor (3) fixiert sind.

4. Luftturbine nach einem der vorhergehenden Ansprüche, zusätzlich umfassend einen Stator (2), welcher eine Vielzahl von Schaufeln (21), die am Stator (2) fixiert befestigt sind, umfasst, wobei das Abschaltsystem (10) stromaufwärts des Stators (2) und des Rotors (3) angeordnet ist.

5. Luftturbine nach Anspruch 4, zusätzlich umfassend eine Adapterdüse (5), welche zwischen dem Abschaltsystem (10) und dem Stator (2) angeordnet ist und welche für die Kopplung des Abschaltsystems (10) einer prismatischen Geometrie mit dem Stator (2) einer zylindrischen Geometrie ausgebildet ist.

6. Luftturbine nach Anspruch 4 oder 5, umfassend eine Einlassnase (23), welche vor dem Stator (2) angeordnet ist und welche den Fluss leitet, damit er axial und gleichmäßig im Stator (2) ist.

7. Luftturbine nach einem der vorhergehenden Ansprüche, wobei das Abschaltsystem (10) mindestens eine Säule einer Vielzahl von Klappen (13) umfasst, welche von einem Antriebssystem (15) betrieben werden.

8. Luftturbine nach Anspruch 7, wobei das Abschaltsystem (10) eine Stütze (11) umfasst, welche eine Vertiefung (19) begrenzt, wobei die Vielzahl von Klappen (13) in der genannten Vertiefung (19) aufgenommen ist und auf der Stütze (11) gestützt ist.

9. Luftturbine nach Anspruch 8, wobei die Stütze (11) im Wesentlichen flache Wände (11c) umfasst und wobei jede der Klappen (13) ein symmetrisches aerodynamisches Profil aufweist und im Wesentlichen flache Ränder (13a, 13b) beinhaltet, welche dazu ausgebildet sind, gegen die genannten Wände (11c) der Stütze (11) eng zu schließen.

10. Luftturbine nach einem der Ansprüche 1 bis 6, wobei das Abschaltsystem (10) mindestens zwei Säulen einer Vielzahl von Klappen (13) umfasst, welche von einem jeweiligen Antriebssystem (15) unabhängig betrieben werden können.

11. Luftturbine nach Anspruch 10, wobei das Abschaltsystem (10) eine Stütze (11), welche eine Vertiefung (19) begrenzt, und eine Trennwand (12), welche derart angeordnet ist, dass sie die Vertiefung (19) im Wesentlichen vertikal teilt, umfasst, wobei die Vielzahl von Klappen (13) in der genannten Vertiefung (19) aufgenommen ist und jede Säule der Vielzahl von Klappen (13) auf der Stütze (11) und der Trennwand (12) gestützt ist.

12. Luftturbine nach Anspruch 11, wobei jede der Klappen (13) des Abschaltsystems (10) ein symmetrisches aerodynamisches Profil aufweist und im Wesentlichen flache Ränder (13a, 13b) beinhaltet, welche dazu ausgebildet sind, gegen die Stütze (11) und die Trennwand (12) eng zu schließen.

13. Luftturbine nach einem der vorhergehenden Ansprüche, wobei jede der Klappen (13) aus elastischem Material hergestellt ist, wobei die Vielzahl von Klappen (13) derart angeordnet ist, dass jede Klappe (13) an die Geometrie der entsprechenden benachbarten Klappe (13) in der Schließstellung angepasst ist, um den Fluss von Fluid zu blockieren.

14. Luftturbine nach einem der vorhergehenden Ansprüche, wobei das mindestens eine Antriebssystem (15) lineare Führungsmittel (17), ein Gestell (16), welches mit den linearen Führungsmitteln (17) gekoppelt ist, ein Ritzel (14), welches an jeder Klappe (13) fixiert und mit dem Gestell (16) gekoppelt ist, und lineare Betätigungsmittel (18), welche dazu ausgebildet sind, das Gestell (16) im Wesentlichen vertikal entlang des linearen Führungselements (17) zu bewegen, sodass die entsprechende Klappe (13) rotiert wird, um den Durchgang des Fluss von Fluid zu öffnen, umfasst.

15. Luftturbine nach dem vorhergehenden Anspruch, wobei die linearen Führungsmittel (17) lineare Führungselemente (17a), an welchen das entsprechende Gestell (16) fixiert ist, und lineare Kugelrollkäfige (17b), welche an der Stütze (11) fixiert sind, umfasst, wobei die genannten linearen Kugelrollkäfige (17b) die Verlagerung des entsprechenden linearen Führungselements (17a) führen.

## Revendications

1. Turbine à air pour extraire l'énergie à partir de dispositifs de colonne d'eau oscillante, comprenant un rotor (3) comprenant une pluralités de pales (31), un système d'arrêt (10) configuré pour ouvrir ou fermer l'entrée d'air au rotor (3), et au moins un système d'entraînement (15) configuré pour actionner le système d'arrêt (10), **caractérisée en ce que** le système d'arrêt (10) aménagé en amont du rotor (3) comprend une pluralité de volets (13), chaque volet (13) étant apte à tourner par rapport à un axe de rotation (F), l'axe de rotation (F) étant aménagé essentiellement horizontal et désaxé par rapport au centre de gravité (D) et/ou par rapport au centre de flottabilité (E) de chaque volet (13), de manière que chaque volet (13) tend à tourner vers une position de fermeture lorsqu'il n'est pas en train d'être actionné par le système d'entraînement (15), fermant l'entrée d'air au rotor (3).

2. Turbine à air selon la revendication précédente, comprenant un système de commande pour ouvrir et fermer le système d'arrêt (10) basé sur une pression d'air détectée dans le rotor (3) et le vitesse de rotation du rotor (3), le système de commande activant le système d'entraînement correspondant (15) pour ouvrir et fermer la turbine à air (1).

3. Turbine à air selon l'une quelconque des revendications précédentes, dans laquelle la pluralité de pales (31) du rotor (3) sont fixées au rotor (3).

4. Turbine à air selon l'une quelconque des revendications précédentes, comprenant en outre un stator (2) comprenant une pluralité de pales (21) fixées au stator (2), le système d'arrêt (10) étant aménagé en amont du stator (2) et du rotor (3).

5. Turbine à air selon la revendication 4, comprenant en outre une buse d'adaptation (5) aménagée entre le système d'arrêt (10) et le stator (2), qui est configurée pour coupler le système d'arrêt (10) ayant une géométrie prismatique au stator (2) ayant une géométrie cylindrique.

6. Turbine à air selon la revendication 4 ou 5, comprenant un bec d'entrée (23) aménagé devant le stator (2) qui plonge le débit pour que celui-ci soit axial et uniforme dans le stator (2).

7. Turbine à air selon l'une quelconque des revendications précédentes, dans laquelle le système d'arrêt (10) comprend au moins une colonne d'une pluralité de volets (13) actionnés par un système d'entraînement (15).

8. Turbine à air selon la revendication 7, dans laquelle le système d'arrêt (10) comprend un support (11) délimitant une cavité (19), la pluralité de volets (13) étant logés dans ladite cavité (19) et supportés sur le support (11).

9. Turbine à air selon la revendication 8, dans laquelle le support (11) comprend des parois essentiellement plates (11c) et chacun des volets (13) a un profile aérodynamique symétrique et comprend des bords essentiellement plats (13a, 13b) configurés pour se fermer hermétiquement contre lesdites parois (11c) du support (11).

10. Turbine à air selon l'une quelconque des revendications 1 à 6, dans laquelle le système d'arrêt (10) comprend au moins deux colonnes d'une pluralité de volets (13) qui peuvent être actionnés indépendamment par un système d'entraînement respectif (15).

11. Turbine à air selon la revendication 10, dans laquelle le système d'arrêt (10) comprend un support (11) délimitant une cavité (19) et une paroi de cloison (12) aménagé essentiellement vertical divisant la cavité (19), la pluralité de volets (13) étant logés dans ladite cavité (19) et chaque colonne de la pluralité de volets (13) étant supportée sur le support et la paroi de cloison (12).

12. Turbine à air selon la revendication 11, dans laquelle chacun des volets (13) du système d'arrêt (10) a un profile aérodynamique symétrique et comporte des bords essentiellement plats (13a, 13b) configurés pour se fermer hermétiquement contre le support (11) et la paroi de cloison (12).

13. Turbine à air selon l'une quelconque des revendications précédentes, dans laquelle chacun des volets (13) est réalisé en matière plastique, la pluralité de volets (13) étant aménagés de manière que chaque volet (13) est adapté à la géométrie du volet attenant correspondant (13) dans la position de fermeture pour bloquer le débit de fluide.

14. Turbine à air selon l'une quelconque des revendications précédentes, dans laquelle ledit au moins un système d'entraînement (13) comprend des moyens de guidage linéaire (17), une crémaillère (16) couplée aux moyens de guidage linéaire (17), un pignon (14) fixé à chaque volet (13) et couplé à la crémaillère (16), des moyens d'actionnement linéaire (18) configurés pour déplacer la crémaillère (16) essentiellement en vertical le long de l'élément de guidage linéaire (17) faisant tourner le volet correspondant (13) pour ouvrir le passage du débit de fluide.

15. Turbine à air selon la revendication précédente, dans laquelle les moyens de guidage linéaire (17) comprennent des éléments de guidage linéaire (17a) auxquels est fixée la crémaillère correspondante (16) et des cages de roulement à billes linéaires (17b) guidant le déplacement de l'élément de guidage linéaire correspondant (17a).
